# EUROPEAN PATENT APPLICATION

(11) **EP 2 535 749 A1**
(43) Date of publication of application: **19.12.2012**
(21) Application number: 11170430.0
(22) Date of filing: 17.06.2011
(51) Int. Cl.: G02B 6/124, G02B 6/34

(54) **Optical interposer**

(71) Applicant: Caliopa NV, 9052 Zwijnaarde (BE)
(72) Inventor: Lardenois, Sébastien, 9052 Zwijnaarde (BE); Collins, Tom, 9052 Zwijnaarde (BE)
(74) Representative: Plas, Axel Ivo Michel

(57) **Abstract**

An optical interposer comprising an array of diffraction grating couplers (04) arranged to couple light from a direction "out-of-plane" into optical waveguides (03); an array of output ports (02) arranged to optically couple light from optical waveguides (03) into an array of optical fibers or other optical elements; and optical waveguides (03) connecting said array of diffraction grating couplers (04) and said array of output ports (02) to route the light from said diffraction gratings (04) into said output ports (02).

## Description

### Field of the Invention

The present invention relates to the coupling of Vertical-Cavity Surface-emitting lasers (VCSELs), a class of device that emits light perpendicular to a wafer's surface, to Photonic Integrated Circuits (PICs) or to optical fibers. More particularly, the invention concerns an increase in the density of VCSELs in an array by use of an optical interposer.

### Background of the Invention

Supercomputers and data centres are driving the need for high interconnect bandwidth as this generally results in more efficient use of microprocessors in real calculations. For distances greater than about 20m, electrical interconnects are impractical and optics are generally used for these longer rack-to-rack interconnects today. As costs of these optical interconnects come down they will take over even for board to board and eventually for on-chip interconnect. These optical interconnects, instead of running at ever increasing bit rates, tend to adopt parallel fiber architectures. This creates the need for multiple laser sources. One of the most attractive devices to meet this need is the VCSEL due to its low power consumption, small size and suitability for wafer test.

Individual VCSELs or VCSEL arrays are mounted by direct or indirect attachment of the VCSELs' substrate to another substrate containing a waveguide. The substrate may be glass, silicon, InP, GaAs, etc. VCSELs are typically flip-chip mounted, i.e. the VCSELs are vertically flipped in order to present laser light to a light coupling device, e.g. a planar waveguide, a mirror, an optical detector, a diffraction grating, etc.

WO 2009/141332 discloses an integrated photonics device for coupling of light between a VCSEL and a waveguide via a diffraction grating on a silicon integrated photonic circuit. Substantial vertical coupling between VCSEL and waveguides facilitates fiber mounting and reduces packaging costs.

As the number of VCSELs working as multiple sources in the same system is increasing, it is desirable to scale the size of the VCSEL. In particular as reductions in the VCSEL power consumption progress (due to both the shorter distances on which they are employed and improvements in VCSEL design), coupled with more efficient ways of dissipating the heat produced, it becomes even more desirable to move to smaller VCSELs.

Unfortunately the size of VCSELs or VCSEL arrays have not to date been scalable. This is because a way must be found to couple the light from the VCSEL array into an optical fiber. VCSEL arrays are today coupled to fiber either by placing a fiber array directly above the VCSEL array or alternatively using an array of mirrors to turn the light through 90 degrees. Sometimes the end of the fiber is micromachined and processed to integrate the mirror into the fiber tip. In most cases coupling loss is improved with an array of lenses in the optical path. In all cases the pitch of the coupling device is determined by the pitch of the fiber. Today the industry standard is 250 um although slightly smaller pitch is available as custom specials.

Until relatively recently the size of certain Integrated Circuits (ICs) were limited by the size of their bond pads. The bond wires used to connect to the IC require a minimum size bond pad and a minimum spacing to adjacent wires and they are typically located around the edge of the IC to minimise bond wire length. The advent of silicon interposers with redistribution layers and Through Silicon Vias changed this. IC's could be designed with bond pads and bumps (significantly smaller than bond pads for wire bonding) and the bond pads could be placed anywhere on the chip. The IC would then be flip-chipped onto the silicon interposer which 'redistributes' or spreads out the signals to larger pads on the opposite side of the interposer. In this way the size of the 'expensive' IC is minimised.

In the same way as the size of IC's have been limited by the area required to get the electrical signals off the chip, the size of VCSEL arrays is limited by the area required to receive the light output from the VCSEL.

It is an object of the present invention to disclose an arrangement using diffraction gratings to couple the light from an array of VCSELs into waveguides and then route the light to output ports which can be interfaced to a standard fiber array.

It is another object of the present invention to disclose an arrangement for coupling of light from multiple laser sources such as VCSEL arrays, emitting light perpendicular or nearly perpendicular to the plane of the chip, into waveguides integrated in the optical interposer using diffraction grating couplers.

### Summary of the Invention

According to the present invention, the above objectives are realized by an optical interposer as set out in claim 1, the optical interposer comprising:
a. an array of diffraction grating couplers arranged to couple light from a direction "out-of-plane" into optical waveguides;
b. an array of output ports arranged to optically couple light from optical waveguides into an array of optical fibers or other optical elements;
c. optical waveguides connecting said array of diffraction grating couplers and said array of output ports to route the light from said diffraction gratings into said output ports.

A photonic device according to the invention integrated onto a chip comprises a first set of photonic waveguides each connected to a diffraction grating coupler at one end. Multiple diffraction grating couplers are arranged in an array. The diffraction grating couplers are adapted for diffracting light from a direction perdendicular or nearly perpendicular to the plane of the chip into the photonic waveguides in the plane of the chip.

The integrated photonic device according to the invention may optionally comprise a photonic integrated circuit (PIC) consisting of one or more optical functions (passive or active) to process the light in the photonic waveguides in some way. Where appropriate the first set of photonic waveguides will be connected to the inputs of the PIC.

The integrated photonic device according to the invention further comprises a second set of photonic waveguides at one end connected to either the first set of photonic waveguides or optionally the outputs from the PIC and at the other end connected to a set of output ports. Said output ports are arranged in an array and are adapted to couple the light into a fiber array either through 'horizontal coupling' (whereby the fibers lie in the plane of the chip) or 'vertical coupling' (whereby the fibers are perpendicular or nearly perpendicular to the plane of the chip).

The integrated photonic device according to the invention further comprises a mechanical structure which physically holds the array of VCSELs in position relative to the optical interposer, and electrical interconnects to route the driver signals, needed to drive the VCSEL array, from where they are either generated or brought onto the interposer to the VCSEL array.

The term "integrated" means that all elements comprising the optical interposer are performed on the same chip.

The output ports are spaced appropriately so as to interface to optical fibers.

Thus the invention concerns a high density "optical interposer" arrangement using diffraction gratings for coupling the light from a dense array of VCSELs into waveguides and then route the light to output ports that are spaced appropriately so that they can be interfaced to a standard fiber array. As the diffraction gratings are typically less than 20 um square, it is possible to arrange an array of diffraction gratings with a pitch significantly smaller than that achievable with either a fiber array or mirror arrangement as in the prior art. The array can easily be arranged in 2D. As a result, the array of VCSELs can be very dense and yet still be interfaced with 'industry standard' fiber arrays.

Smaller VCSEL arrays which, according to the invention are now easily interfaced to fiber arrays, have many advantages.

Firstly, the number of VCSELs per wafer increases which makes the optical component cheaper. As III-V material and processing is expensive this can make significant differences even to overall system cost.

Secondly, there is the issue of yield which is usually area dependent as it is often material related. In an array with multiple lasers they all have to work or the array is useless. So not only is each VCSEL array on the wafer cheaper but there is a higher percentage of VCSELs that will work.

Thirdly, due to a thermal expansion mismatch between silicon and III-V materials, with systems where one of these materials is flip-chipped onto the other, there is a certain maximum size before the thermal mismatch becomes an issue. Using denser arrays means more laser sources can fit in that size.

The "optical interposer" can be manufactured on many different substrates. To make an efficient diffraction grating coupler the waveguide material and cladding material require high enough index contrast (normally greater than 20%). Typical material combinations comprise silicon/silicon dioxide, nitride/silicon dioxide, silicon oxynitride/silicon dioxide, tantalum oxide/silicon dioxide, or two appropriate polymers. Those skilled in the art can devise many more combinations, as these are just some examples

The grating may be raised, etched partially or etched completely through the film. In another embodiment, a reflective element may be used which is located parallel to the grating and a specific distance behind the grating (on the opposite side to the side from which the light originates).

The substrate supporting the diffraction grating and waveguide may also comprise an electrical interposer, e.g. to avoid issues with electrical crosstalk, or to allow 3D stacking above an IC e.g. VCSEL driver.

In a preferred embodiment, as defined by claim 2, the coupling from said array of output ports into said array of optical fibers or other optical elements may be either "out-of-plane" or "in-plane". In other words, the output ports may be arranged vertically (or nearly vertically) or horizontally to the average plane of the chip.

As defined by claim 3, said array of output ports are spaced appropriately so as to interface to said array of optical fibers or other optical elements. The term "appropriately" means that there is enough space between the output ports to allow the optical fibers to connect with the output ports.

In a preferred embodiment, as defined by claim 4, said array of diffraction grating couplers are arranged to interface to an array of VCSELs. The position of said array of VCSELs is arranged relative to the optical interposer for connecting electrical signal routing. VCSELs are preferably mounted as described in Applicant's patent application No. EP11160547.3 "a submount arrangement for VCSELs" which is enclosed hereby by reference.

In a preferred embodiment, as defined by claim 5, the pitch of said array of VCSELs (01) and/or the pitch of said array of optical fibers is not uniform, and/or the fibers in the array of optical fibers are multicore.

In another_embodiment, as defined by claim 6, multiple arrays of VCSELs (01) and/or multiple arrays of optical fibers are interfaced to the interposer.

In the above the term "and/or" between two elements means either one of the elements or both elements.

As defined by claim 7, the VCSEL pitch may be less than 250 um.

It is possible to add additional integrated circuitry on the same chip between the VCSEL array and output fibers.

Optionally, the device may comprise an integrated light processing function for coupling the light from the grating couplers to the output ports. As such the VCSEL array may also be used as a multiple laser source for a photonic integrated circuit (PIC).

In one embodiment, as defined by claim 8, optical functions may be included between said array of diffraction gratings couplers and said array of output ports.

In another embodiment, as defined by claim 9, electrical functions are integrated in the optical interposer.

In another aspect, as defined by claim 10, the invention provides a method for coupling light between a light source and optical fibers or other optical elements, the method comprising:
a. coupling a light source to an array of diffraction grating couplers;
b. coupling light from an array of diffraction grating couplers from a direction "out-of-plane" into optical waveguides;
c. coupling light through said optical waveguides to an array of output ports;
d. coupling light from said array of output ports into an array of optical fibers or other optical elements.

In a preferred embodiment, as defined by claim 11, said light source is an array of VCSELs emitting light perpendicular or nearly perpendicular to the plane of the optical interposer.

In yet another embodiment, as defined by claim 12, the method further comprises the step of coupling light through optical functions included between said array of diffraction gratings couplers and said array of output ports.

### Brief Description of the Drawings

Fig. 1 illustrates (a) a top view and (b) a 3D view of an embodiment of an optical interposer according to the invention. For clarity only the optical circuit is shown;

Fig. 2 illustrates a cross section of one example of a diffraction grating used to couple light into a waveguide in an embodiment of an optical interposer according to the invention;

Fig. 3 illustrates a cross section of three options for designs of the higher index material part of a diffraction grating used in three embodiments of an optical interposer according to the invention;

Fig. 4 illustrates a top view of an embodiment of an optical interposer according to the invention with horizontal output coupling;

Fig. 5 illustrates a 3D view of an output coupler of an embodiment of an optical interposer according to the invention (a) without upper cladding and (b) with upper cladding;

Fig. 6 illustrates a cross section through the cantilever coupler of the embodiment of Fig. 5b; and

Fig. 7 illustrates a functional diagram of an example of an optical function introduced between the input diffraction grating and the output coupler in an embodiment of an optical interposer according to the invention.

Fig. 8 illustrates a cross section of an embodiment of an optical interposer according to the invention by input diffraction grating coupler with support for VCSEL and hermetic sealing around the VCSEL.

### Detailed Description of Embodiment(s)

Reference signs are indicated by a figure number followed by a part number. Each part keeps its part number throughout the figures. In the claims, the parts are referenced by their part number.

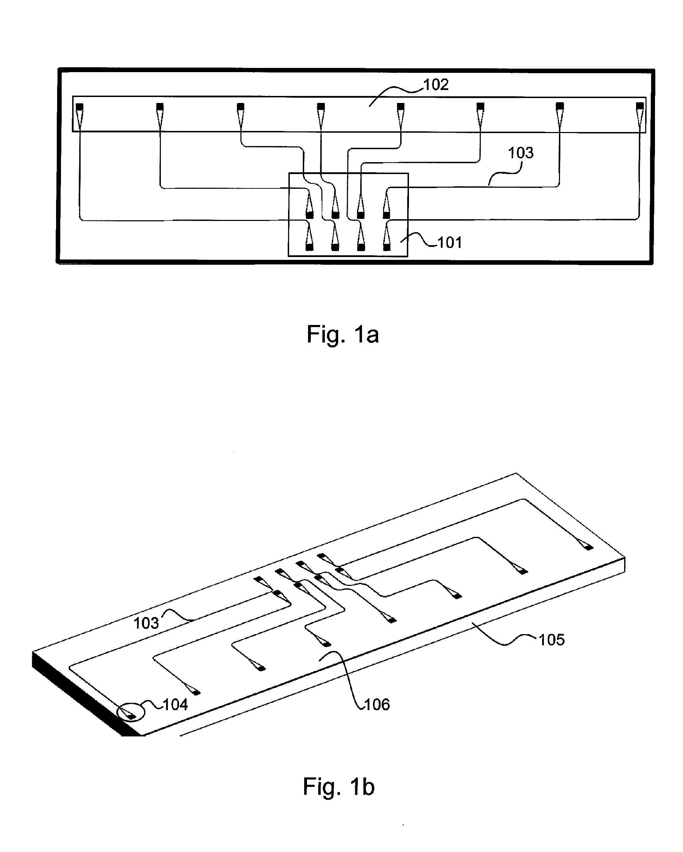

Fig. 1a shows an embodiment of an optical interposer comprising three main areas: area 101 to accept a VCSEL array, area 102 to accept a fiber array and the optical routing 103 between the VCSEL array and the fiber array. The array of diffraction grating couplers in area 101 of the optical transposer, arranged to couple light from a VCSEL array, is densely spaced while the array of diffraction grating couplers in area 102, arranged to couple light into the fiber array, is spaced further apart. For clarity aspects of the optical transposer which may be required to bring electrical signals to the VCSEL array and aspects required to hold the VCSEL array in position are not shown in Fig 1.

Fig. 1b further shows diffraction gratings 104. The substrate 105 comprises an under cladding material 106 of a lower refractive index than the waveguide material of the optical routings 103. The optical interposer may optionally have an 'overclad' material which covers the waveguide, also of a lower refractive index material than the waveguide material(not shown)

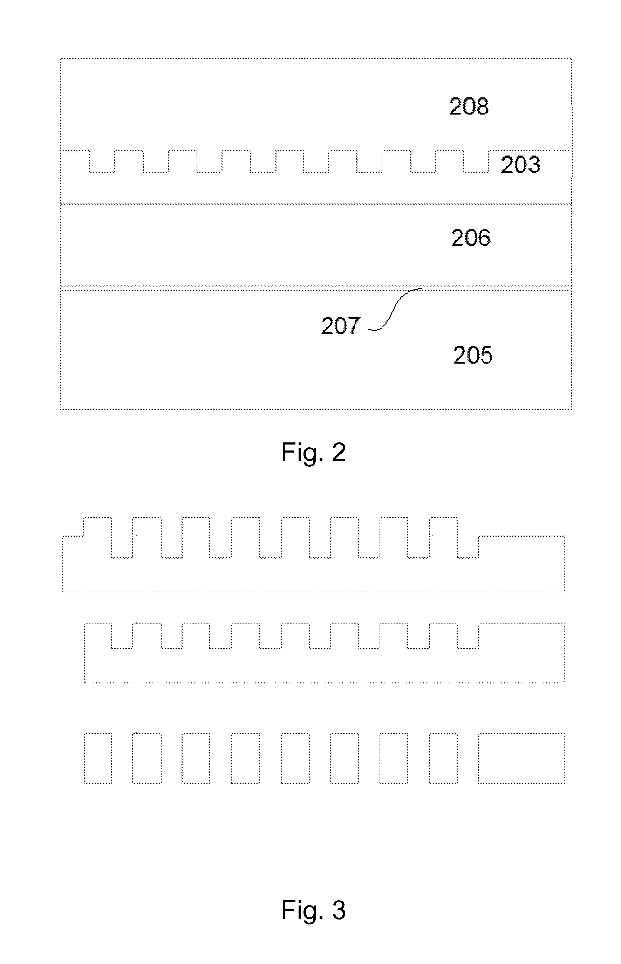

Fig. 2 shows a cross section of an embodiment of a diffraction grating 104 of Fig. 1 b. The layers are applied on top of each other as follows:
- a substrate 205;
- optionally a reflective element 207;
- an under cladding 206 of a lower refractive index material;
- a waveguide 203 of a higher refractive index material; and
- optionally an upper cladding 208 of a lower refractive index material.

The substrate 205 may be silicon, glass, ceramic, etc. The optional reflective element 207 may be a thin reflective layer or it may be a distributed bragg reflector (DBR). The lower index material 206 may be silicon dioxide, polymer or any other material with a refractive index lower than the chosen waveguide material. The higher index waveguide material 203 may be silicon, polysilicon, silicon nitride, silicon oxynitride, tantalum oxide, polymer, Lithium niobate, Indium phosphide, Gallium arsenide, hydex (a proprietary material) or any material with a refractive index higher than the chosen under cladding material.

Fig. 3 shows a cross section of three embodiments of the higher index material part (203) of the diffraction gratings 104. The structures are designed so that the grating period equals the operating wavelength divided by the effective refractive index such that the Bragg condition is met for the operating wavelength at an angle close to vertical. In this way the first order mode can be efficiently coupled from 'out-of-plane' into the waveguide or visa-versa. We hereby refer to the following diffraction grating coupler design papers: "High efficiency fiber-to-chip grating couplers realised using an advanced CMOS compatible Silicon-on-Insulator Platform", D. Vermeulen et al. Optics Express 18917, pg 18278-18283 (2010); "Compact focusing frating couplers for silicon-on-insulator Integrated circuits", Van Laere et al, Photonics technology Letters vol 19. No 23(2007); and "A high efficiency out-of-plane fiber coupler for coupling to high index contrast waveguides", D. Taillaert ECOC. P30-31 (2001).

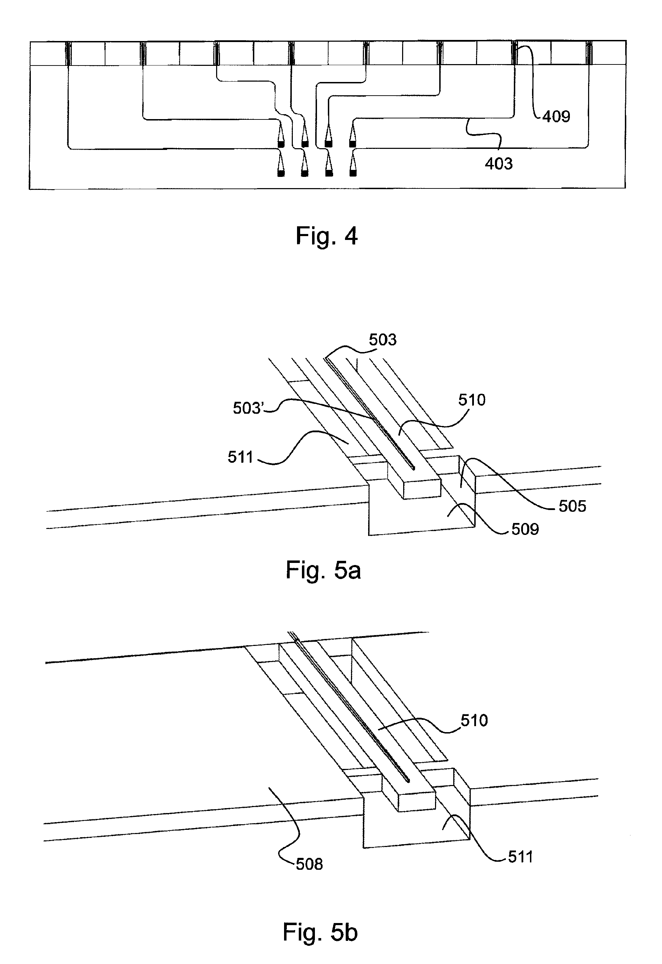

Fig. 4 shows a top view of an embodiment of an optical interposer with horizontal output couplers 409. The couplers are arranged in the plane of the waveguides 403. The fiber array is presented to the edge of the chip.

Fig. 5 shows a 3D view of the horizontal output coupler 409 of Fig. 4 with (a) the upper cladding 508 not shown, and (b) the upper cladding 508 shown.

The coupler 409 consists of a cantilever 510 of a lower index cladding material. The substrate material 505 is removed around the cantilever 510. The higher index material 503 is tapered down to a thin tip 503' thereby forcing the light into the cantilever 510 where it is less well confined and the beam size is better matched to fiber.

A cavity 511 is etched in the substrate along the cantilever 510. The cavity 511 is preferably filled with another material with a refractive index even lower than that of the cladding material. This refractive index difference and the dimensions of the cantilever 510 are designed so that the mode profile in the cantilever is well matched to the fiber it is to be coupled to.

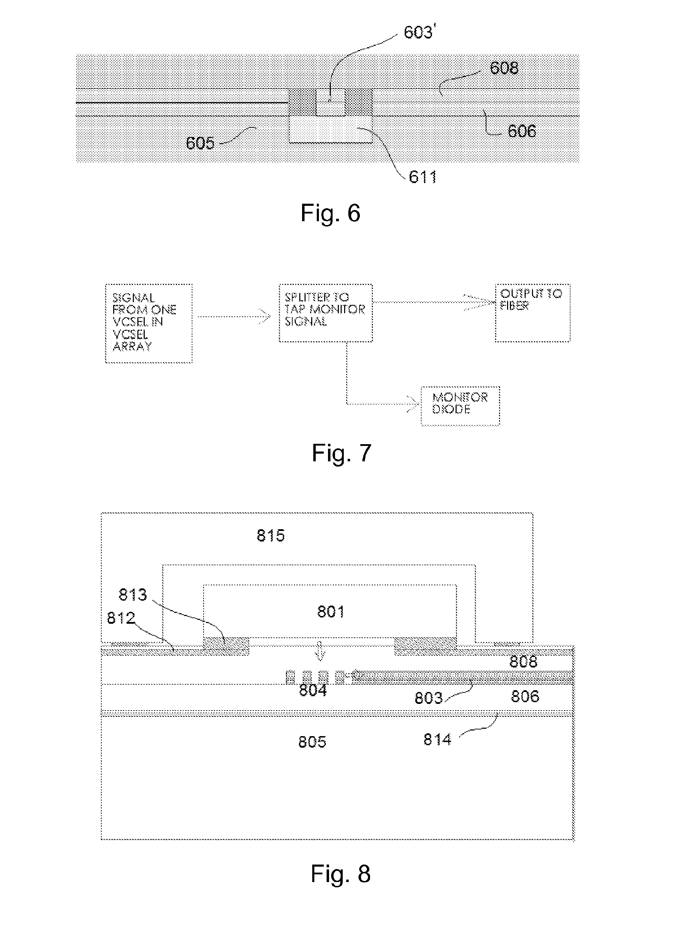

Fig. 6 shows a cross section through the cantilever coupler of the embodiment of Fig. 5.

Fig. 7 is a functional diagram of an example of an additional optical circuitry introduced between the input diffraction grating and the output coupler.

Fig. 8 shows a cross section of an embodiment of an optical interposer. Light is coupled from the VCSEL 801 in a direction perpendicular or nearly perdendicular to the plane of the chip. The chip further comprises an input diffraction grating coupler 804 whereby said light is coupled into a waveguide 803. The waveguide 803 is applied on top of an under cladding 806. The under cladding 806 is applied on a DBR 814, which is applied on a substrate 805. On top of the waveguide 803 an over cladding 808 is applied. Electrical connections 812 in the form of metal tracks and a metal bump support 813 provide electrical connections to the VCSEL 801. A 'CAP' 815 protects the VCSEL array and creates a local hermetic sealing around the VCSEL array 801.

The optical interposer may also contain e.g.:
- structures to mechanically fix or support the VCSEL array above the input gratings;
- photonic components or integrated circuits to process light in some way at some point between the input coupler and the output coupler.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An optical interposer comprising:
a. an array of diffraction grating couplers (04) arranged to couple light from a direction "out-of-plane" into optical waveguides (03);
b. an array of output ports (02) arranged to optically couple light from optical waveguides (03) into an array of optical fibers or other optical elements;
c. optical waveguides (03) connecting said array of diffraction grating couplers (04) and said array of output ports (02) to route the light from said diffraction gratings (04) into said output ports (02).

2. An optical interposer according to claim 1, **characterized in that** the coupling from said array of output ports (02) into said array of optical fibers or other optical elements may be either "out-of-plane" or "in-plane".

3. An optical interposer according to claim 1 or 2, **characterized in that** said array of output ports (02) are spaced appropriately so as to interface to said array of optical fibers or other optical elements.

4. An optical interposer according to any of the previous claims, **characterized in that** said array of diffraction grating couplers (04) are arranged to interface to an array of VCSELs (01), whereby the position of said array of VCSELs (01) is arranged relative to the optical interposer for connecting electrical signal routing (12).

5. An optical interposer according to any of the previous claims, **characterized in that** the pitch of the array of VCSELs (01) and/or the pitch of the array of optical fibers is not uniform, and/or the fibers in the array of optical fibers are multicore.

6. An optical interposer according to any of the previous claims, **characterized in that** multiple arrays of VCSELs (01) and/or multiple arrays of optical fibers are interfaced to the interposer.

7. An optical interposer according to the previous claim, **characterized in that** the VCSEL pitch may be less than 250 um.

8. An optical interposer according to any of the previous claims, **characterized in that** optical functions are included between said array of diffraction gratings couplers (04) and said array of output ports (02).

9. An optical interposer according to any of the previous claims, **characterized**
**in that** electrical functions are integrated in the optical interposer.

10. A method for coupling light between a light source (01) and optical fibers or
other optical elements, the method comprising:
a. coupling a light source (01) to an array of diffraction grating couplers (04);
b. coupling light from an array of diffraction grating couplers (04) from a direction "out-of-plane" into optical waveguides (03);
c. coupling light through said optical waveguides (03) to an array of output ports (02);
d. coupling light from said array of output ports (02) into an array of optical fibers or other optical elements.

11. Method according to claim 10, **characterized in that** said light source is an array of VCSELs (01) emitting light perpendicular or nearly perpendicular to the plane of the optical interposer.

12. The method according to claim 10 or 11, further comprising the step of coupling light through optical functions included between said array of diffraction gratings couplers (04) and said array of output ports (02).
